# EUROPEAN PATENT SPECIFICATION

(11) **EP 0 520 403 B1**
(45) Date of publication and mention of the grant of the patent: **27.09.1995**
(21) Application number: 92110630.8
(22) Date of filing: 24.06.1992
(51) Int. Cl.: B23B 27/14, B23P 15/28

(54) **Hard sintered compact for tools**
Hartgesinterter Presskörper für Werkzeuge
Compact fritté dur pour outils

(30) Priority: 25.06.1991 JP 153099/91; 25.06.1991 JP 153100/91
(43) Date of publication of application: 30.12.1992
(73) Proprietor: SUMITOMO ELECTRIC INDUSTRIES, LTD, Osaka-shi, Osaka-fu 541 (JP)
(72) Inventor: Nakai, Tetsuo, c/o Itami Works of Sumitomo, Itami-shi, Hyogo-ken (JP); Goto, Mitsuhiro, c/o Itami Works of Sumitomo, Itami-shi, Hyogo-ken (JP)
(74) Representative: Hansen, Bernd, Dr. Dipl.-Chem.

(56) References cited:
- EP-A- 0 223 585
- EP-A- 0 371 251
- FR-A- 2 498 962
- JP-A-62 109 975
- JP-A-63 191 505
- PATENT ABSTRACTS OF JAPAN vol. 11, no. 322 (C-453)(2769) 20 October 1987
- PATENT ABSTRACTS OF JAPAN vol. 12, no. 466 (M-772)(3313) 7 December 1988

## Description

### BACKGROUND OF THE INVENTION

Cubic boron nitride is the hardest material next to diamond, and a sintered compact of cubic boron nitride (cBN) is employed in various cutting tools. Recently, the sintered compact in which fine cBN particles are bonded by metals, or by various ceramics using a high pressure sintering technique, has become commercially obtainable. When this sintered compact is utilized in a machining tool insert, the insert is constructed of composite material in which the hard sintered compact layer is placed only on the cutting edge portion and is bonded to a high rigidity tool holder, such as a cemented carbide.

One example of cBN sintered compacts suitable for cutting tools is disclosed in U.S. Pat. No.4,334,928 - Yazu et al, containing 80 ∼ 20 % by vol. of cBN and the remaining proportion of carbide, nitride, boride and silicide of elements selected from groups of the 4a and 5a periodic table, with mixtures thereof or solid solution compounds as principal components. These compounds constitute a continuous bonding phase in the texture of the sintered compact.

An hard sintered compact for tools, in which the strength and wear resistance of a cutting edge made of the sintered compact is improved in order to eliminate the damage to the cutting edge, is disclosed in Japanese Patent Laying-Open No.62-228450. In this sintered compact, a binder includes 25 ∼ 50 % by wt. of Al, a compound also containing Ti such as carbide of Ti, and 4 - 40 % by weight of W contained in the compound containing Ti or contained as WC. These components react with cBN in the sintering process, to produce aluminum boride, titanium boride and the like, which serve to firmly bond the binder and cBN or another binder.

U.S. Pat. No.4,911,756 discloses a hard sintered compact for tools, including 50 - 75 % by vol. of cBN and 25 - 50 % by vol. of a binder containing 20 - 50 % by wt. of aluminum, titanium carbonitride, and the like, and 4 - 40 % by wt. of tungsten.

Other examples of cBN sintered compacts suitable for cutting tools is disclosed in U.S. Pat. No.3,743,489 - Wentorf et al, containing greater than 70 % by volume of cBN and the remaining metallic phase consisting of aluminum and at least one alloying element selected from the group consisting of nickel, cobalt, manganese, iron, vanadium, and chromium and mixtures thereof.

Another example of cBN sintered compounds suitable for cutting tools is disclosed in U.S. Pat. No.4,403,015 - Nakai et al (which shows the features of the preamble of claim 1). In this case a powder is used for forming the intermediate bonding layer. The bonding layer is comprised of cBN in an amount less than 70 % by volume, the residual part principally consisting of a compound selected from among carbide, nitride, carbonitride or boride of 4a, 5a, 6a transition metals of the periodic table, an admixture thereof, or a solid solution compound thereof. After pressing or in the state of powder, this bonding layer is placed on the cemented carbide substrate in a thickness less than 2 mm, and on this layer is placed a powder for forming the sintered compact containing diamond or cBN in an amount in excess of 20 % by volume, and the whole is then sintered under a superhigh pressure and temperature.

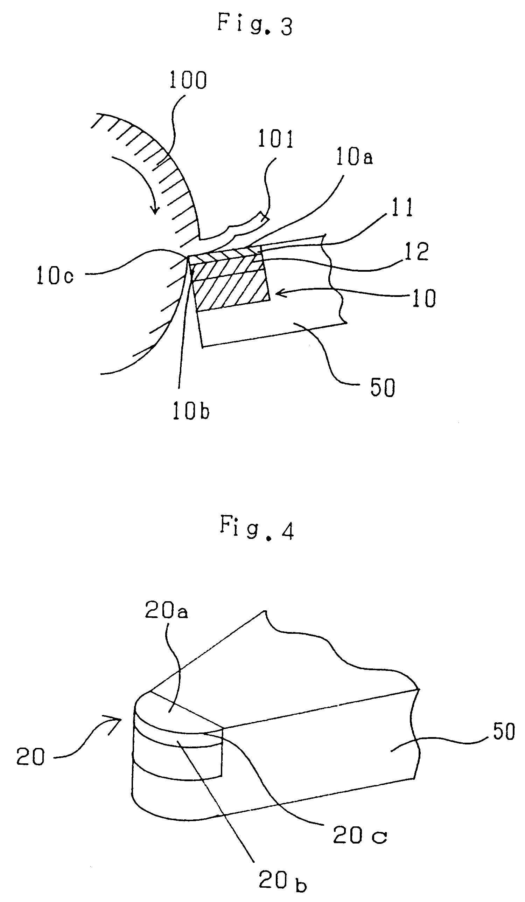

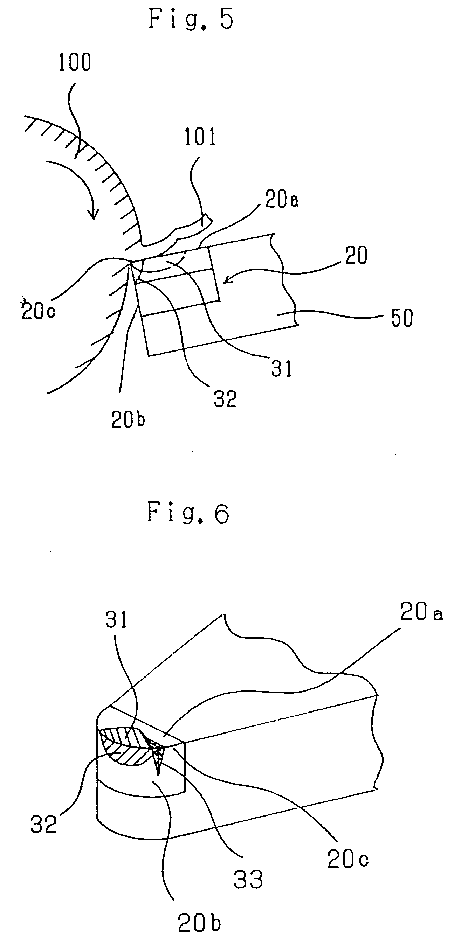

Fig.4 is a partial side view of a prior art's cutting tool. In Fig.4, a cutting edge portion (20) made of sintered composite is bonded to a cemented carbide tool holder (50). The cutting edge portion (20) is composed of a cutting edge (20c), a rake face (20a) and a flank face (20b). The cutting edge (20c) is a boundary of the rake face and the flank face. Fig.5, is a partial cross-sectional view of a cutting process using an insert of the tool from Fig.4. As shown in Fig.5, a workmaterial (100) rotates at a high rate of speed in the direction of the arrow. The cutting tool is moved into the rotating workmaterial, and a chip (101) is made on the rake face (20a) of the cutting edge portion (20). As cutting continues, crater wear (31) develops on the rake face and flank wear (32) develops on the flank face (20b). The wear on each face is shown in Fig.6. The crater wear (31) and the flank wear (32) have a boundary of the cutting edge (20c) which contacts with a surface of the workmaterial (100). On the other hand, notch wear (33) develops at the boundary of the portion in contact with the workmaterial and air exposure. In this way, as cutting continues, partial wear, rather than uniform wear develops on the cutting edge portion.

However, in this prior arts cutting tool, the cutting edge portion (20) has a uniform composition of cBN sintered compact in a prior art insert. As the wear progresses in a non-uniform manner, it eventually becomes, impossible to continue cutting. The non-uniform wear shortens the practicable cutting time.

This invention discloses a cutting tool including a cBN sintered compact which comprises:
a) a first sintered compact layer containing cBN, and a first binder material containing Al;
b) a second sintered compact layer containing about 40-65% by volume of cBN, and a second binder material containing about 2-30% by weight of Al;
wherein said first sintered compact layer is bonded to said second sintered compact layer and said first and second sintered compact layers are bonded to a tool holder in such a way that said first sintered compact layer constitutes a rake face of the cutting tool,
which tool is characterized in that
(a) the cBN content in the first sintered compact layer is in the range of 75-98% by volume, and the first binder material contains about 1-40% by weight of Al;
(b) the thickness of the first sintered compact layer is about 0.04-0.2 mm; and
(c) the combined thickness of said first sintered compact layer and said second sintered compact layer is not less than 0.5 mm.

A preferred embodiment of the cutting tool is obtained by using the aforementioned first binder material which contains about 3 - 15 % by weight of Co, about 1 ∼ 5 % by weight of Al, and the remainder of WC, or by using a binder which contains about 3 - 40 % by weight of Al and the remainder of at least one Ti-containing compound selected from a group consisting of (Ti,M)C, (Ti,M)N, (Ti,M)(CN), an admixture thereof, and a solid solution compound thereof. In this case, M is a transition metal of 4a, 5a ,6a in the periodic table excluding Ti.

A further preferred embodiment of the cutting tool is obtained by using the aforementioned second binder material which contains about 2 - 30 % by volume of Al and at least one compound selected from a group of (TiX)C, (TiX)N, (Ti,X)(CN), an admixture thereof and a solid solution compound thereof. In this case X is a transition metal of 4a, 5a, 6a in the periodic table, excluding Ti.

This invention seeks to provide a cutting tool which has higher flank wear resistance, higher crater wear resistance, and higher notch wear resistance.

Another objective of this invention is to provide a cutting tool for nodular cast iron, high speed steel, and Inconel, which are difficult to cut using prior art cutting tool materials.

Another objective of this invention is to provide a construction of the cBN sintered compact which will lengthen practicable cutting time and prevent partial wear.

### BRIEF DESCRIPTION OF THE DRAWINGS

Objective and features of this invention will become apparent from the following description of the preferred embodiment thereof, with reference to accompanying drawings, in which;
Fig.1 shows a cross-sectional view of the hard sintered compact of the invention;
Fig.2 is a partial side view of a cutting tool, according to the invention;
Fig.3 is a partial cross-sectional view of a cutting process, using a cutting tool of the invention;
Fig.4 is a partial side view of a prior art's cutting tool;
Fig.5 is a partial cross-sectional view of a cutting process, using the cutting tool shown in Fig.4.
Fig.6 shows the general wear portion of the cutting edge from the process in Fig.5.

### DETAILED DESCRIPTION OF THE PREFERRED EMBODIMENTS OF THE INVENTION

To develop this invention, the inventors involved conducted a series of experiments in order to identity a cBN sintered compact with a long practicable cutting time. The cBN sintered compact in which a concentration of cBN in a sintered compact layer of rake surface is different from a concentration of cBN in a sintered compact layer of flank face, has longer practicable cutting time than cBN sintered compact of prior arts.

The hard sintered compact for the cutting tool of this invention utilizes a first sintered compact layer and a second sintered compact layer. The first sintered compact layer contains about 75 ∼ 98 % by volume of cBN and the first binder material. The first binder material contains about 1 ∼ 40 % by weight of Al element. The second sintered compact layer contains about 40 ∼ 65 % by volume of cBN and the second binder material. The second binder material contains about 2 ∼ 30 % by weight of Al element, and the second binder material constitutes a continuous matrix.

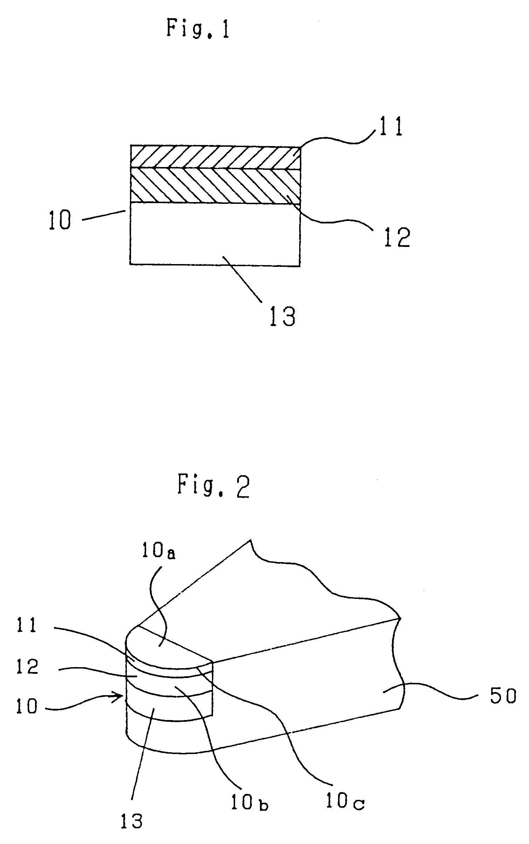

A composite, which is composed of the first sintered compact layer bonded to the second sintered compact layer, is bonded directly or bonded by an existing intermediate cemented carbide layer (13) to a tool holder as shown in Fig.1. A rake face of the cutting tool is the main surface of the first sintered compact layer.

After diamond, cBN has the hardest and highest heat conductivity and is chemically stable. Therefore, because of the higher concentration of cBN in the sintered compact, the sintered compact is harder, has higher heat conductivity, and is chemically stable. Accordingly, the first sintered compact layer is harder, has higher heat conductivity, and is more stable than the second sintered compact layer. In addition, Al or metal compounds of Al react with cBN, and create compounds such as AlB₂. These compounds serve to firmly bond the binder and cBN or another binder.

It is preferable that the first binder material contain about 3 ∼ 15 % by weight of Co, about 1 ∼ 5 % by weight of Al, and the remainder of WC and inevitable impurities. A further preferred first binder material would contain about 3 ∼ 40 % by weight of Al and the remainder of at least one Ti-containing compound selected from a group consisting of compounds (TiM)C, (TiM)N, (TiM)(CN), an admixture thereof, and a material solid solution compound thereof, and inevitable impurities. In this case, M is a transition metal or metals of 4a, 5a, 6a in the periodic table, but excluding Ti. It is preferable that the second binder material contain about 2 ∼ 30 % by weight of Al and the remainder of at least one compound selected from a group consisting of compounds (Ti,X)C, (Ti,X)N, (TiX)(CN), an admixture thereof, and a material solid solution compound thereof, and inevitable impurities. In this case, X is a transition metal or metals of 4a, 5a, 6a in the periodic table, but excluding Ti. A cutting edge portion (10) is composed of the first sintered compact layer (11), the second sintered compact layer (12), and cemented carbide substrate (13), as shown in Fig.1. Ordinarily, the cemented carbide substrate is bonded to the second sintered layer, during a sintering under a superhigh pressure and temperature. However, if desired, the cemented carbide substrate can be excluded. The cutting edge portion (10) is bonded to a tip portion of a cutting tool (50) as shown in Fig.2. A main surface of the first sintered compact layer (11) constructs a rake face (10a) in the cutting tool. The thickness of the first sintered compact layer 11 is approximately 0.04 ∼ 0.2 mm. The combined of the thickness of the first sintered compact layer and the second sintered compact layer is greater than approximately 0.5 mm.

In this invention, it is preferable to develop a sintered compact using W as a component of M and Hf as a component of X. A main surface of the first sintered compact layer constitutes a rake face in this invention. The volume concentration of cBN in the first sintered compact layer is higher than in the second sintered compact layer. Notch wear develops due to a reaction between air exposure, the work material and the cutting tool. Crater wear develops due to a reaction between the workmaterial and the cutting tool material at high temperatures. As cBN is chemically stabler than a binder material, the first sintered compact layer has better notch wear resistance and crater wear resistance than the second sintered compact layer.

On the other hand, a volume concentration of the binder material in the second sintered compact layer is higher than that of in the first sintered compact layer. Each cBN particle is strongly bonded to each other by binder material. Flank wear develops as cBN particles fall from the sintered compact because a workmaterial scours the cutting tool. Accordingly, the second sintered compact layer has higher flank wear resistance than the first sintered compact layer.

Therefore, in this invention, the cutting tool is constructed so that the two types of sintered compacts are suitably arranged to correspond to the types of wear. As this construction prevents development of wear, practicable cutting time is extended.

The thickness of the first sintered compact layer is preferably approximately 0.04-0.2 mm. Within the above range the best results with regard to wear resistance can be obtained.

The combined thickness of the first sintered compact layer and the second sintered compact layer is preferably thicker than approximately 0.5 mm. This thickness is most suitable for a low flank wear width.

The first sintered compact layer contains approximately 75 ∼ 98 % by volume of cBN. When the concentration of cBN is less than about 75 % by volume, crater wear easily develops as chemical atability is reduced because of the low amount of cBN. When the concentration of cBN is more than about 98 % by volume, the amount of binder material becomes relatively lower, and the bonding strength of cBN particles is reduced.

The second sintered compact layer contains approximately 40 ∼ 65 % by volume of cBN. When the concentration of cBN is less than about 40 % by volume, the strength and hardness of the sintered compact is reduced and flank wear develops easily, especially when cutting high speed steel. When the concentration of cBN is more than about 65 % by volume, cBN particles easily fall from the sintered compact because the lower amount of binder material reduces the bonding strength between cBN particles and the bonding material.

In this invention, two types of binder material are preferably used for the first sintered compact layer. The first type of binder material contains about 3-15 wt.% Co, 1-5 wt.% Al, and the remainder of WC, and the second type of binder material contains 3-40 wt.% Al, and a compound of transition metals. These binder materials demonstrate the preferable performance of the first binder material. The above compositions are most useful with regard to the bonding strength of cBN particles by binder materials and with regard to wear resistance.

The second binder material contains 2 ∼ 30 % by weight of Al. When the concentration of Al is less than about 2 % by weight, the bonding strength between cBN particles and binder materials weakens because of insufficient reaction between Al and cBN particles. When the concentration of Al is more than about 30 % by weight, flank wear resistance weakens, because increasing the amount of reacted compounds, for example, AlB₂, increases the bonding strength between cBN particles and binder materials, but decreases the flank wear resistance.

Concerning the Ti compounds in the first binder material, it is preferable to employ W as a metal M, because Ti compounds containing W have excellent wear resistance. Concerning the Ti compounds in the second binder material, it is preferable to employ Hf as a metal X, because Ti compounds containing Hf have excellent heat resistance and, therefore, have excellent flank wear resistance at high speed cutting.

### EXAMPLE 1

A binder material powder cosisting of 5 % by weight of Co powder, 3 % by weight of Al powder and the remainder of WC powder, and cBN powder were used as the initial raw material powders for the first sintered compact layer. The binder material powder and the cBN powder were prepared in a volume ratio of 15 : 85. By uniformly mixing the prepared powder using a cemented carbide pot and cemented carbide balls, a raw material powder having the desired particle diameter was developed for the first sintered compact layer.

To deveolp a carbide powder, a nitride powder and a carbonitride powder which contains Ti and Al powder, were mixed together as shown in Table 1 for binder material powders of the second sintered compact layer. These binder material powders and cBN powder were prepared in a volume ratio of 40 : 60, and the prepared powders were uniformly mixed using a cemented carbide pot and cemented carbide balls. Raw material powders having the desired particle diameter were used for the second sintered compact layer. A circular plate of cemented carbide composed of WC-10 wt% Co was introduced into a Mo vessel, and then the raw material powder for the second sintered compact layer and the raw material powder for the first sintered compact layer were placed in that order on the circular plate of cemented carbide. This vessel was introduced into a superhigh pressure and temperature apparatus, and sintered under a pressure of 50Kb at a temperature of 1350 °C for 15 minutes. An examination of a polished surface of the obtained composites showed that two layers of the cBN sintered compacts, which correspond to the above two raw material powders, were bonded strongly to each other and to the cemented carbide substrate.

The aforementioned composites were worked into cutting tools, so that the first sintered compact layer of each composite constituted a rake face and the thickness of the first sintered compact layer was 0.07 mm. The cutting tools, which were bonded to a cemented carbide tool holder, were applied to cut the outer portions of round bars with a 150 mm outside diameter made of FCD 70 (nodular cast iron). The cutting conditions were as follows;

| | |
|---|---|
| Cutting Speed | 250 m/min |
| Depth of Cut | 0.25 mm |
| Feed Rate | 0.20 mm/rev |
| Type | Wet |
| Time | 20 minutes |

Table 1 also shows values of the flank wear width of the cutting edges and whether chipping occurred or not.

**Table 1**

| Sample No. | Composition of Binder Material in the Second Sintered Compact Layer (wt.%) | Chipping | Flank Wear Width (mm) |
|---|---|---|---|
| Example | | | |
| 1 | 85(Ti,Ta)C-15Al | Not Found | 0.11 |
| 2 | 75(Ti,Zr)C-25Al | Not Found | 0.13 |
| 3 | 90(Ti,Ta)(CN)-10Al | Not Found | 0.15 |
| 4 | 82(Ti,W)(CN)-28Al | Not Found | 0.17 |
| 5 | 98(Ti,Zr)N-2Al | Not Found | 0.10 |
| 6 | 75(Ti,Mo)C-30Al | Not Found | 0.19 |

| Comparative Example | | | |
|---|---|---|---|
| 7 | 65(Ti,Ta)C-35Al* | Not Found | 0.29 |
| 8 | 99.2(Ti,W)(CN)-0.8Al* | Chipping Occurred after 10 Minutes of Cutting | - |

### EXAMPLE 2

Binder material powders containing Co powder, Al powder and the remainder of WC powder were used for the first sintered compact layer as shown in Table 2. These binder material powders and cBN powder were prepared in a volume ratio of 12 : 88. By uniformly mixing the prepared powders using a cemented carbide pot and cemented carbide balls, raw material powders for the first sintered compact layer were developed.

Then, (Ti,Hf)C powder and Al powder were prepared in a weight ratio of 9 : 1 for a binder material powder of the second sintered compact layer. The binder material powder and cBN powder were prepared in a volume ratio of 37 : 63. By uniformly mixing the prepared powder using a cemented carbide pot and cemented carbide balls, a raw material powder for the second sintered compact was developed.

As in Example 1, a circular plate of cemented carbide composed of WC-10 wt% Co was introduced into a Mo vessel and then the raw material powder for the second sintered compact layer was placed on the circular plate, and then the raw material powder for the first sintered compact layer was further placed on them. This vessel was introduced into a superhigh pressure and temperature apparatus, and sintered under a pressure of 45Kb at a temperature of 1300 °C for 20 minutes. An examination of a polished surface of the obtained composites showed that two layers of the cBN sintered compact which correspond to the above two raw material powders, were bonded strongly to each other and to the cemented carbide substrate.

The aforementioned composites were worked into cutting tools, so that the first sintered compact layer of each composite constituted a rake face and the thickness of the first sintered compact layer was as shown in Table 2. The cutting tools, which were bonded to cemented carbide substrates, were applied to cut the outer portions of round bars with a 100 mm outside diameter made of Inconel 718. The cutting conditions were as follows;

| | |
|---|---|
| Cutting Speed | 200 m/min |
| Depth of Cut | 0.20 mm |
| Feed Rate | 0.12 mm/rev |
| Type | Wet |

Table 2 also shows results of measured practicable cutting time and the reasons for impracticable cuttings.

In sample No. 17, the low content of Al in the first sintered compact reduced bonding strength between the cBN particles and chipping occurred. Substantial crater wear occurred in sample No. 18 due to the high content of Al in the first sintered compact layer.

**Table 2**

| Sample No. | The First Sintered Compact Layer | | Reason for Impracticable Cutting Time | Practicable Cutting Time (Minutes) |
|---|---|---|---|---|
| | Composition of Binder (wt.%) | Thickness (mm) | | |
| Example | | | | |
| 9 | 7Co-4Al-WC | 0.19 | Flank Wear | 19 |
| 10 | 10Co-3Al-WC | 0.10 | Notch Wear | 15 |
| 11 | 15Co-2Al-WC | 0.08 | Notch Wear | 13 |
| 12 | 3Co-5Al-WC | 0.15 | Flank Wear | 14 |
| 13 | 12Co-1Al-WC | 0.04 | Crater Wear | 11 |
| 14 | 7Co-3Al-WC | 0.06 | Notch Wear | 15 |
| 15 | 16Co-6Al-WC | 0.06 | Crater Wear | 10 |
| 16 | 7Co-4Al-WC | 0.21 | Flank Wear | 9 |

| Example Comparative | | | | |
|---|---|---|---|---|
| 17 | 2Co-0.8Al* -WC | 0.08 | Chipping | 1 |
| 18 | 10Co-45Al* -WC | 0.15 | Crater Wear | 2 |

### EXAMPLE 3

A mixed binder material powder consisting of 7 % by weight of Co powder, 4 % by weight of Al powder and the remainder of WC powder was used for the first sintered compact layer. The binder material powder and cBN powder were prepared in a volume ratio as shown in Table 3. By uniformly mixing the prepared powders using a cemented carbide pot and cemented carbide balls, raw material powders were developed for the first sintered compact layer.

A mixed binder material powder consisting of (Ti,Hf)(CN) powder and Al powder in a weight ratio of 9 : 1 was used for the second sintered compact layer.

The binder material powder and cBN powder were prepared in a volume ratio as shown in Table 3. By uniformly mixing the prepared powders using a cemented carbide pot and cemented carbide balls, raw material powders were developed for the second sintered compact layer.

As in the first two examples, a circular plate of cemented carbide composed of WC-10 wt% Co was introduced into a Mo vessel, the raw material powder for the second sintered compact layer was placed on the circular plate and then the raw material powder for the first sintered compact layer was placed on the second layer. This vessel was introduced into a superhigh pressure and temperature apparatus, and sintered under a pressure of 45Kb at a temperature of 1300 °C for 20 minutes. An examination of the polished surface of the obtained composites showed that two layers of the cBN sintered compact which correspond to the above two raw material powders, were bonded strongly to each other and to the cemented carbide substrate.

The aforementioned composites were worked into cutting tools, so that the first sintered compact layer of each composite constituted a rake face and the thickness of the first sintered compact layer was 0.05 mm.

**Table 3**

| Sample No. | Composition of cBN and Binder (volume %) | | Practicable Cutting Time (Minutes) |
|---|---|---|---|
| | The First Sintered Compact Layer | The Second Sintered Compact Layer | |
| Example | | | |
| 19 | 85:15 | 55:45 | 47 |
| 20 | 90:10 | 45:55 | 38 |
| 21 | 88:12 | 60:40 | 40 |
| 22 | 82:18 | 64:36 | 29 |
| 23 | 80:20 | 40:60 | 32 |
| 24 | 81:19 | 50:50 | 35 |

| Comparative Example | | | |
|---|---|---|---|
| 25 | 73*:27 | 55:45 | 16 |
| 26 | 70*:30 | 45:55 | 14 |
| 27 | 82:18 | 37*:63 | 15 |
| 28 | 85:15 | 70*:30 | 20 |

The cutting tools, which were bonded to cemented carbide tool holders, were applied to cut the outer portions of round bars with a 100 mm outside diameter made of FCD 100 (Nodular cast iron), having a V shaped groove at a periphery of the round bars. The cutting conditions were as follows;

| | |
|---|---|
| Cutting Speed | 120 m/min |
| Depth of Cut | 0.20 mm |
| Feed Rate | 0.15 mm/rev |
| Type | Wet |

Table 3 shows the results of the practicable cutting time.

Fig.1 shows the constitution of an invented composite (10) used for a cutting edge portion of a cutting tool. The cutting portion (10) is composed of the first sintered compact layer (11) with a high concentration of cBN in volume ratio and the second sintered compact layer (12) with a low concentration of cBN in volume ratio. The thickness of the first sintered layer is at least 0.04 mm and not greater than 0.2 mm.

Fig.2 is a side view in which the composite (10) shown in Fig.1 is bonded to a cemented carbide tool holder (50). The main surface of the first sintered compact layer (11) constitutes a rake face (10a). A flank face (10b) which has a boundary of the cutting edge (10c) between the rake face (10a) and the flank face (10b), is mainly constituted by the second sintered compact layer. A cemented carbide substrate (13) exists as shown in Fig.2. Such a configuration is obtained by bonding the cutting edge (10C) made of two layers sintered compact to a tool holder. Fig.3 shows a cross-section view of cutting process, with a workmaterial being cut by this invention's cutting tool. The cutting edge (10c) enters into the surface of the work, a chip (101) is developed on the rake face (10a) made of the first sintered compact layer (11).

### EXAMPLE 4

A binder material powder consisting of 10 % by weight of Al and the remainder of (Ti,W)C, and cBN powder was used for developing raw material powders used for the first sintered compact layer. The binder material powder and the cBN powder were prepared in a volume ratio of 20 : 80. By uniformly mixing the prepared powder using a cemented carbide pot and cemented carbide balls, a raw material powder having the desired particle diameter was developed for the first sintered compact layer.

To develop a carbide powder, a nitride powder and a cabonitride powder which contain Ti and Al powder, these powders were mixed together as shown in Table 4 for binder material powders of the second sintered compact layer. These binder material powders and cBN powder were prepared in a volume ratio of 45 : 55, and the prepared powders were uniformly mixed using a cemented carbide pot and cemented carbide balls. Raw material powders having the desired particle diameter were provided for the second sintered compact layer. A circular plate of cemented carbide was Introduced into a Mo vessel, and then the raw material powder for the second sintered compact layer and

**Table 4**

| Sample No. | Composition of Binder in the Second Sintered Compact Layer (wt.%) | Chipping | Flank Wear Width (mm) |
|---|---|---|---|
| Example | | | |
| 29 | 85(Ti,Hf)C-15Al | Not Found | 0.10 |
| 30 | 75(Ti,Zr)C-25Al | Not Found | 0.15 |
| 31 | 90(Ti,Ta)(CN)-10Al | Not Found | 0.13 |
| 32 | 82(Ti,Hf)(CN)-28Al | Not Found | 0.17 |
| 33 | 98(Ti,W)N-2Al | Not Found | 0.18 |
| 34 | 70(Ti,Mo)C-30Al | Not Found | 0.20 |

| Comparative Example | | | |
|---|---|---|---|
| 35 | 65(Ti,W)C-35Al* | Not Found | 0.3 |
| 36 | 99(Ti,Ta)(CN)-1Al* | Chipping Happend after 10 Minutes Cutting | - |

the raw material powder for the first sintered compact layer were placed in that order on the circular plate of cemented carbide. This vessel was introduced into a super high pressure and temperature apparatus, and sintered under a pressure of 50Kb at a temperature of 1300 °C for 15 minutes. An examination of a polished surface of the obtained composites shoved that two layers of the cBN sintered compacts which correspond to the above two raw material powders, were bonded strongly to each other and to the cemented carbide substrate.

The aforementioned composites were developed into cutting tools so that the first sintered compact layer of each composite constituted a rake face and thickness of the first sintered compact was 0.05 mm. The cutting tools which were bonded to cemented carbide tool holders, were applied to cut the outer portions of round bars with a 100 mm outside diameter made of FCD 60 (Nodular cast iron). The cutting conditions were as follows

| | |
|---|---|
| Cutting Speed | 300 m/min |
| Depth of Cut | 0.35 mm |
| Feed Rate | 0.20 mm/rev |
| Type | Wet |
| Time | 30 minutes |

Table 4 shows the values of the flank wear width of the cutting edges and whether or not chipping occurred.

### EXAMPLE 5

(Ti,Hf)C powder and Al powder were prepared in a weight ratio of 9 : 1 for a binder material powder of the second sintered compact layer. This binder material powder and cBN powder were prepared in a volume ratio of 40 : 60. By uniformly mixing the prepared powders using a cemented carbide pot and cemented carbide balls, raw material powders for the second sintered compact layer were developed. To develop a carbide powder, a nitride powder and a carbonitride powder which contain Ti and Al powder, were mixed together as shown in Table 5 for binder material powders of the first sintered compact layer. These binder material

**Table 5**

| Sample No. | The First Sintered Compact Layer | | Reason for Impracticable Cutting | Practicable Cutting Time (Minutes) |
|---|---|---|---|---|
| | Composition of Binder (wt.%) | Thickness | | |
| Example | | | | |
| 37 | 93(Ti,V)(CN)-7Al | 0.19 | Flank Wear | 16 |
| 38 | 95(Ti,W)C-5Al | 0.15 | Notch Wear | 21 |
| 39 | 71(Ti,Ta)N-29Al | 0.11 | Flank Wear | 19 |
| 40 | 85(Ti,Hf)C-15Al | 0.09 | Flank Wear | 17 |
| 41 | 97(Ti,Zr) (CN)-3Al | 0.08 | Notch Wear | 16 |
| 42 | 90(Ti,Hf)C-10Al | 0.07 | Notch Wear | 23 |
| 43 | 90(Ti,W)C-10Al | 0.02 | Notch Wear | 13 |
| 44 | 96(Ti,W)(CN)-4Al | 0.21 | Flank Wear | 14 |

| Comparative Example | | | | |
|---|---|---|---|---|
| 45 | 68(Ti,Zr)N-42Al* | 0.06 | Crater Wear | 3 |

powders and cBN powder were prepared in a volume ratio of 22 : 78. By uniformly mixing the prepared powders using a cemented carbide pot and cemented carbide balls, raw material powders for the first sintered compact layer were developed.

As in Example 4, a circular plate of cemented carbide was introduced into a Mo vessel and the raw material powder for the second sintered compact layer was placed on the circular plate, and then the raw material powder for the first sintered compact layer was further placed on the second layer. This vessel was introduced into a superhigh pressure and temperature apparatus, and sintered under a pressure of 45Kb at a temperature of 1300 °C for 20 minutes. An examination of a polished surface of the obtained composites showed that two layers of the cBN sintered compact which correspond to the above two raw material powders, were bonded strongly to each other and to the cemented carbide substrate. The composites were worked into a cutting tool. The first sintered compact layer of each composite constituted a rake face and thickness of the first sintered compact is shown in Table 5. The cutting tools, which were bonded to a cemented carbide tool holder, were applied to cut the outer portions of round bars with a 100 mm outside diameter made of Inconel 718. The cutting conditions were as follows;

| | |
|---|---|
| Cutting Speed | 170 m/min |
| Depth of Cut | 0.20 mm |
| Feed Rate | 0.12 mm/rev |
| Type | Wet |

Table 5 shows the results of the measured practicable cutting time and the reasons for impracticable cuttings. Notch wear occurred in sample No. 43 due to the reduced thickness in the first sintered compact layer, thus reducing practicable cutting time. In sample No. 45, there was substantial crater wear due to the high content of Al in the first sintered compact layer.

### EXAMPLE 6

A mixed binder material powder consisting of 15 % by weight of Al powder and the remainder of (Ti,Hf)C powder was developed for the first sintered compact layer. The binder material powder and cBN powder were prepared in a volume ratio as shown in Table 6. Raw material powders for the first sintered compact layer were obtained by the method used in example 5. A mixed binder material powder consisting of 10 % by weight of Al powder and the remainder of (Ti,W)(CN) was provided for the second sintered compact layer.

**Table 6**

| Sample No. | Composition of cBN and Binder (volume %) | | Practicable Cutting Time (Minutes) |
|---|---|---|---|
| | The First Sintered Compact Layer | The Second Sintered Compact Layer | |
| Example | | | |
| 46 | 75:25 | 50:50 | 59 |
| 47 | 97:3 | 55:45 | 53 |
| 48 | 80:20 | 60:40 | 68 |
| 49 | 85:15 | 63:37 | 60 |
| 50 | 90:10 | 59:41 | 53 |
| 51 | 77:23 | 41:59 | 51 |

| Comparative Example | | | |
|---|---|---|---|
| 52 | 73*:27 | 60:40 | 37 |
| 53 | 85:15 | 38*:62 | 33 |
| 54 | 80:20 | 66*:34 | 29 |
| 55 | 99*:1 | 38:62 | 18 (chipping) |

This binder material powder and cBN powder were prepared in a volume ratio as shown in Table 6. By uniformly mixing the prepared powders using a cemented carbide pot and cemented carbide balls, raw material powders were developed for the second sintered compact layer.

Next, a circular plate of cemented carbide composed of WC-8 wt.% Co was introduced into a Mo vessel, the raw material powder for the second sintered compact layer was placed on the circular plate, and then the raw material powder for the first sintered compact layer was placed on the secnd layer. This vessel was introduced into a superhigh pressure and temperature apparatus, and sintered under a pressure of 45Kb at a temperature of 1250 °C for 20 minutes. An examination of a polished surface of the obtained composites showed that two layers of the cBN sintered compact which correspond to the above two raw material powders, were bonded strongly to each other and to the cemented carbide substrate.

The aforementioned composites were worked into cutting tools, so that the first sintered compact layer of each composite constituted a rake face and the thickness of the first sintered compact layer was 0.05 mm. The cutting tools, which were bonded to a cemented carbide tool holder, were applied to cut the outer portions of round bars with a 100 mm outside diameter made of FCD 45 (Nodular cast iron). The cutting conditions were as follows;

| | |
|---|---|
| Cutting Speed | 350 m/min |
| Death of Cut | 0.30 mm |
| Feed Rate | 0.20 mm/rev |
| Type | Wet |

Table 6 shows the results of the measured practicable cutting time.

## Claims

1. A cutting tool including a cBN sintered compact which comprises:
a) a first sintered compact layer containing cBN, and a first binder material containing Al;
b) a second sintered compact layer containing about 40-65% by volume of cBN, and a second binder material containing about 2-30% by weight of Al;
wherein said first sintered compact layer is bonded to said second sintered compact layer and said first and second sintered compact layers are bonded to a tool holder in such a way that said first sintered compact layer constitutes a rake face of the cutting tool,
being characterized in that
(a) the cBN content in the first sintered compact layer is in the range of 75-98% by volume, and the first binder material contains about 1-40% by weight of Al;
(b) the thickness of the first sintered compact layer is about 0.04-0.2 mm; and
(c) the combined thickness of said first sintered compact layer and said second sintered compact layer is not less than 0.5 mm.

2. The cutting tool as claimed in claim 1, wherein said first binder material contains about 3-40% by weight of Al, and at least one compound containing Ti selected from (Ti,M)C, (Ti,M)N, (Ti,M)(CN), an admixture thereof and a solid solution compound thereof, where M represents a transition metal element or elements belonging to any one of groups 4a, 5a and 6a of the periodic table excluding Ti.

3. The cutting tool as claimed in claim 1, wherein said first binder material contains 1-5% by weight of Al element, 3-15% by weight of Co and the remainder of WC.

4. The cutting tool as claimed in claim 1, wherein said second binder material contains about 2-30% by weight of Al element and at least one compound selected from (Ti,X)C, (Ti,X)N, (Ti,X)(CN), an admixture thereof and a solid solution compound thereof, where X represents a transition metal element or elements belonging to any one of groups 4a, 5a and 6a of the periodic table excluding Ti.

5. The cutting tool as claimed in claim 1, wherein said second sintered compact layer is bonded to a cemented carbide substrate.

6. The cutting tool as claimed in claim 2, wherein the transition metal M is W.

7. The cutting tool as claimed in claim 4, wherein the transition metal X is Hf.

## Patentansprüche

1. Schneidwerkzeug, das einen gesinterten cBN-Preßkörper enthält, welcher
a) eine erste cBN-haltige gesinterte Preßkörperschicht und ein erstes Al-haltiges Bindemittelmaterial;
b) eine zweite gesinterte Preßkörperschicht, die etwa 40 bis 65 Vol.% cBN enthält, und ein zweites Bindemittelmaterial, das etwa 2 bis 30 Gew.% Al enthält; umfaßt,
wobei die erste gesinterte Preßkörperschicht mit der zweiten gesinterten Preßkörperschicht verbunden ist, und die erste und die zweite Preßkörperschicht derart mit einem Werkzeughalter verbunden sind, daß die erste gesinterte Preßkörperschicht eine Spanfläche des Schneidwerkzeuges bildet,
dadurch **gekennzeichnet,** daß
(a) der cBN-Gehalt in der ersten gesinterten Preßkörperschicht im Bereich von 75 bis 98 Vol.% liegt, und das erste Bindemittelmaterial etwa 1 bis 40 Gew.% Al enthält;
(b) die Dicke der ersten gesinterten Preßkörperschicht etwa 0,04 bis 0,2 mm ist; und
(c) die Dicke der ersten gesinterten Preßkörperschicht und der zweiten gesinterten Preßkörperschicht zusammen nicht geringer als 0,5 mm ist.

2. Schneidwerkzeug nach Anspruch 1, in dem das erste Bindemittelmaterial etwa 3 bis 40 Gew.% Al und mindestens eine Ti-haltige Verbindung, ausgewählt unter (Ti,M)C, (Ti,M)N, (Ti,M)(CN), einem Gemisch der genannten und einer festen Lösung einer der genannten Verbindungen, wobei M ein Übergangsmetallelement oder -elemente, (das) die zu einer der Gruppen 4a, 5a und 6a des Periodensystems (gehört) gehören, ausgenommen Ti, enthält.

3. Schneidwerkzeug nach Anspruch 1, in dem das erste Bindemittelmaterial 1 bis 5 Gew.% Al-Element, 3 bis 15 Gew.% Co und als Rest WC enthält.

4. Schneidwerkzeug nach Anspruch 1, in dem das zweite Bindemittelmaterial etwa 2 bis 30 Gew.% Al-Element und mindestens eine Verbindung, ausgewählt unter (Ti,X)C, (Ti,X)N, (Ti,X)(CN), einem Gemisch der genannten und einer der genannten Verbindungen in fester Lösung, wobei X ein Übergangsmetallelement oder -elemente, die zu einer der Gruppen 4a, 5a und 6a des Periodensystems gehören, ausgenommen Ti, darstellt, enthält.

5. Schneidwerkzeug nach Anspruch 1, in dem die zweite gesinterte Preßkörperschicht mit einem Sintercarbid-Substrat verbunden ist.

6. Schneidwerkzeug nach Anspruch 2, in dem das Übergangsmetall M W ist.

7. Schneidwerkzeug nach Anspruch 4, in dem das Übergangsmetall X Hf ist.

## Revendications

1. Outil de coupe comportant un compact fritté en cBN qui comprend :
a) une première couche de compact fritté contenant cBN, et un premier matériau de liant contenant Al ;
b) une seconde couche de compact fritté contenant environ 40 à 65% en volume de cBN et un second matériau de liant contenant environ 2 à 30% en poids de Al ; dans lequel ladite première couche de compact fritté est collée à ladite seconde couche de compact fritté et lesdites premières et secondes couches de compact fritté sont collées à un porte-outils de manière telle que ladite première couche de compact fritté constitue une face d'attaque de l'outil de coupe, étant caractérisé en ce que
(a) la teneur en cBN dans la première couche de compact fritté est dans la plage de 75 à 98% en volume, et le premier matériau de liant contient environ 1 à 40% en poids de Al ;
(b) l'épaisseur de la première couche de compact fritté est d'environ 0,04 à 0,2 mm ; et
(c) l'épaisseur combinée de ladite première couche de compact fritté et de ladite seconde couche de compact fritté n'est pas inférieure à 0,5 mm.

2. Outils de coupe selon la revendication 1, dans lequel ledit premier matériau de liant contient environ 3 à 40% en poids de Al, et au moins un composé contenant Ti sélectionné parmi (TiM)C, (TiM)N, (TiM)(CN), un mélange de ceux-ci et un composé solide en solution de ceux-ci, où M représente un élément ou des éléments de métal de transition appartenant à l'un quelconque des groupes 4a, 5a, 6a du tableau périodique excluant Ti.

3. Outil de coupe selon la revendication 1, dans lequel ledit premier matériau de liant contient 1 à 5% en poids d' élément Al, 3 à 15% en poids de Co et le restant de WC.

4. Outil de coupe selon la revendication 1, dans lequel ledit second matériau de liant contient environ 2 à 30% en poids d' élément Al et au moins un composé sélectionné parmi (Ti,X)C, (Ti,X)N, (Ti,X)(CN), un mélange de ceux-ci et un composé solide en solution de ceux-ci, où X représente un élément ou des éléments de métal de transition appartenant à l'un quelconque des groupes 4a, 5a, 6a du tableau périodique excluant Ti.

5. Outil de coupe selon la revendication 1, dans lequel ladite seconde couche de compact fritté est collée à un substrat en carbure cémenté.

6. Outil de coupe selon la revendication 2, dans lequel le métal de transition M est W.

7. Outil de coupe selon la revendication 4, dans lequel le métal de transition X est Hf.
